(19) Europäisches Patentamt
European Patent Office
Office européen des brevets

(11) **EP 2 955 500 B1**

(12) **EUROPÄISCHE PATENTSCHRIFT**

(45) Veröffentlichungstag und Bekanntmachung des Hinweises auf die Patenterteilung:
**19.09.2018 Patentblatt 2018/38**

(51) Int Cl.:
***G01N 13/02*** *(2006.01)*    ***G01B 11/26*** *(2006.01)*

(21) Anmeldenummer: **15171651.1**

(22) Anmeldetag: **11.06.2015**

(54) **KONTAKTWINKELMESSGERÄT**

CONTACT ANGLE MEASURING DEVICE

APPAREIL DE MESURE D'ANGLE DE CONTACT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **13.06.2014 DE 102014211369**

(43) Veröffentlichungstag der Anmeldung:
**16.12.2015 Patentblatt 2015/51**

(73) Patentinhaber: **SITA Messtechnik GmbH**
**01217 Dresden (DE)**

(72) Erfinder:
• **Haberland, Dr.-Ing. Ralf**
**01257 Dresden (DE)**

• **Pescoller, Lukas**
**39031 Bruneck (IT)**
• **Gottschall, Sebastian**
**01187 Dresden (DE)**
• **Schümann, Lars**
**01328 Dresden (DE)**

(74) Vertreter: **Kailuweit & Uhlemann Patentanwälte Partnerschaft mbB**
**Bamberger Straße 49**
**01187 Dresden (DE)**

(56) Entgegenhaltungen:
EP-A1- 0 919 801        DE-A1- 10 022 503
DE-A1-102005 059 352    US-A- 5 268 733

**Beschreibung**

Gegenstand der vorliegenden Erfindung sind eine Vorrichtung und ein Verfahren zur Messung des Kontaktwinkels von Flüssigkeitstropfen auf Materialoberflächen.

Die Benetzbarkeit der Oberflächen von Metall- und Kunststoffteilen ist ein wichtiges Qualitätsmerkmal vor nachfolgenden Prozessschritten wie dem Beschichten oder Kleben. Eine unzureichende Benetzbarkeit der Metall- und Kunststoffoberflächen führt zu einer Qualitätsbeeinträchtigung, so dass die geforderte Funktionalität nicht mehr gewährleistet ist. Ursachen können Verunreinigungen sowie eine unzureichend hohe Oberflächenenergie der Teile sein. Bei Metallteilen kann die Verunreinigung der Oberfläche durch eine Sauberkeitskontrolle mittels Fluoreszenzmessung überprüft werden. Die Fluoreszenzmesstechnik eignet sich allerdings nicht für die Sauberkeitskontrolle von Kunststoffoberflächen, da diese in der Regel eine hohe Eigenfluoreszenz aufweisen. Eine Sauberkeitskontrolle der Kunststoffoberflächen kann unter bestimmten Voraussetzungen über die Benetzungskontrolle erfolgen. Eine gute Benetzbarkeit wird erreicht, wenn die Oberflächenenergie des Teiles größer als die Oberflächenspannung des Beschichtungsstoffes ist. Die Oberflächenenergie von ideal sauberen Teilen lässt sich gezielt durch Oberflächenvorbehandlung wie zum Beispiel eine Plasmabehandlung oder durch Beschichten mit speziellen Funktionsschichten erhöhen bzw. verändern. Die gewünschte Wirkung dieser Vorbehandlung ist im Rahmen der Qualitätssicherung regelmäßig zu prüfen, um eine hohe Prozesssicherheit zu gewährleisten.

Stand der Technik zur einfachen Kontrolle der Benetzbarkeit der Oberflächen ist derzeit der Einsatz von Testtinten. Das Testtintenverfahren ist eine Schnellprüfung, mit dem der Anwender einen Richtwert für die Oberflächenenergie des zu kontrollierenden Teils erhält. Dabei werden Testflüssigkeiten mit definierter Oberflächenspannung auf das zu kontrollierende Teil aufgetragen. Ist die Oberflächenenergie des Metall- oder Kunststoffteiles größer als die Oberflächenspannung der Testtinte, spreitet die aufgetragene Tinte. Im umgekehrten Fall, bei einer größeren Oberflächenspannung der Testtinte, zieht sich die Testflüssigkeit zusammen und es bilden sich unregelmäßig Tropfen aus. Dieses Verfahren ist nur eingeschränkt nutzbar, da die maximal prüfbare Oberflächenenergie des Prüfteils durch die größte mögliche Oberflächenspannung einer Testtinte mit 72 mN/m beschränkt ist. Des Weiteren ergeben sich folgende Nachteile bei dem Verwenden der Testtinten zur Kontrolle der Benetzung:

• Das Auftragen der Testtinten erfolgt flächig, wodurch die zu untersuchenden Oberflächen grob verschmutzt werden.
• Die in den Testtinten verwendeten Chemikalien sind teilweise giftig und fortpflanzungsschädigend. Bei der Verwendung und Entsorgung sind besondere Vorsichtsmaßnahmen zu beachten.
• Testtinten sind nur begrenzt haltbar.
• Testtintenreihen verschiedener Flüssigkeitsgemische sind nicht vergleichbar, aufgrund unterschiedlicher zwischenmolekularer Wechselwirkungen.

Eine weitere Möglichkeit, die Benetzbarkeit von Metall- und Kunststoffoberflächen zu kontrollieren, ist das Messen des Kontaktwinkels einer Flüssigkeit auf dem Festkörper. Die derzeit auf dem Markt angebotenen Kontaktwinkelmessgeräte basieren größtenteils auf der Sessile-Drop-Methode. Diese sieht vor, die Tropfenkontur eines zuvor platzierten Flüssigkeitstropfens durch die Aufnahme eines Schattenbildes mit Hilfe einer Bildverarbeitung auszuwerten. Mit dieser Methode lässt sich die Oberflächenenergie des Festkörpers über den Kontaktwinkel genau bestimmen. Bei den auf dieser Methode basierenden kommerziellen Messgeräten handelt es sich grundsätzlich um einen zweiteiligen Aufbau. Das Messmodul beinhaltet eine Dosiereinheit, um einen Flüssigkeitstropfen mit einem bestimmten Volumen auf die Oberfläche zu applizieren, und ein optisches System, bestehend aus Kamera mit Objektiv und Beleuchtung. Die optische Achse ist parallel zur Festkörperoberfläche ausgerichtet. Das so erzeugte Schattenbild wird erfasst und zu einem angeschlossenen PC übertragen. Eine Software bestimmt aus dem Schattenbild die Tropfenkontur und den Kontaktwinkel und berechnet anschließend die Oberflächenenergie. Neben stationären Labormessgeräten gibt es mobile Kontaktwinkelmessgeräte. Bekannte Anbieter sind zum Beispiel die Firma Krüss mit dem Messgerät GH11, die Firma DataPhysics mit dem Messgerät PCA 100M, die Firma Fibro System AB mit dem Messgerät PGX sowie die Firma Sindatek mit dem Messgerät Sindatek 100P. Nachteile dieser Kontaktwinkelmessgeräte sind

• der hohe Preis,
• große erforderliche Auflagefläche (Oberflächen mit komplexe Geometrien können nicht kontrolliert werden),
• sehr geringer Automatisierungsgrad (Nutzereingriffe sind notwendig) sowie
• die eingeschränkte Mobilität bei der Prozesskontrolle durch die notwendige Verwendung eines PCs.

Ein Gerät zur Bestimmung der Konzentration eines den Kontaktwinkel beeinflussenden Stoffes in einer Lösung ist in der EP 1 729 109 A1 beschrieben. Hier kommen zwei Kameras zum Einsatz, die den Kontaktwinkel eines Lösungstropfens auf der Materialoberfläche im rechten Winkel zueinander erfassen.

Eine ähnliche, weniger automatisierte Vorgehensweise ist in der US 5,268,733 beschrieben. Hier wird der Schatten des Tropfens durch eine Beleuchtungsquelle, die Licht parallel zur Materialoberfläche aussendet, an eine senkrecht zur Materialoberfläche angeordnete Fläche projiziert. Diese Fläche weist eine Skalierung auf, so dass der Kontaktwinkel direkt an der Fläche abgelesen werden kann. Bei diesem Aufbau handelt es sich offensichtlich um eine nur für Labormessungen nutzbare Lösung. Erkennbar ist eine aufwendige Justierung der Prüfoberfläche gegenüber der skalierten Schattenfläche notwendig. Der großtechnische Einsatz hingegen erfordert schnelle Messung mit robusten Konstruktionen.

Ein weiterer Nachteil der bekannten Kontaktwinkelmessgeräte, die auf dem Prinzip der EP 1 729 109 A1 beruhen ist, dass die Materialoberfläche unter Umständen zu Spiegelungen neigt. Dadurch ist es schwierig für die eingesetzte Auswertesoftware, den Verlauf der Materialoberfläche korrekt zu bestimmen. So kann es zu Fehlberechnungen kommen, die gegenwärtig nur durch menschliche Nachkontrolle zu erkennen und zu korrigieren sind.

Die DE 197 54 765 C1 beschreibt ein Kontaktwinkelmessgerät, bei dem ein Tropfen einer Testflüssigkeit auf einer Oberfläche abgesetzt wird. Dieser Tropfen wird mit einem über ein Prisma umgelenkten, parallel zur Oberfläche verlaufenden Lichtstrahl beleuchtet. Das Licht wird nach dem Passieren des Tropfens von einem zweiten Prisma in eine Kamera umgelenkt. In der Kamera erfolgen die Digitalisierung und anschließend die Berechnung des Kontaktwinkels. Schwierig ist bei dieser Konstruktion, den Kontaktwinkel mit hinreichender Genauigkeit zu erfassen, da sich dieser naturgemäß unmittelbar an der Oberfläche ausbildet und von dem zweiten umlenkenden Prisma, in dessen Kontaktbereich mit der Oberfläche, erfasst werden muss. Sollten hier Beschädigungen der Prismenkante oder Verschmutzungen vorliegen, ist eine genaue Messung kaum möglich.

Es stellt sich die Aufgabe, ein Kontaktwinkelmessgerät vorzuschlagen, das neben der Eignung für den industriellen Einsatz auch eine Lösung für das Problem der Erkennung der Lage der Oberfläche durch die Software aufweist.

Erfindungsgemäß wird die Aufgabenstellung mit einer Anordnung nach Anspruch 1 gelöst. Das erfindungsgemäße Verfahren ist im Anspruch 10 offenbart. Vorteilhafte Ausführungsformen sind in den rückbezogenen Unteransprüchen beschrieben.

Die erfindungsgemäße Anordnung weist eine Beleuchtungsvorrichtung, eine Bilderfassungsvorrichtung, eine Schattenfläche und einen Tropfenapplikator auf, wobei die Beleuchtungsvorrichtung einen zu einer Materialoberfläche parallelen Lichtstrahl erzeugt. Mithilfe des Tropfenapplikators wird ein Tropfen einer Probenflüssigkeit auf die Materialoberfläche aufgebracht. Der Lichtstrahl projiziert einen Schattenriss des Tropfens auf die Schattenfläche. Erfindungswesentlich ist, dass die Schattenfläche in einem Winkel zwischen kleiner 90° und größer 0,5°, bevorzugt zwischen 45° und 5°, besonders bevorzugt zwischen 10° und 30° gegen die Materialoberfläche geneigt ist. Das auf der Schattenfläche entstehende Bild wird mittels der Bilderfassungsvorrichtung aufgenommen und digitalisiert. Dieses Bild kann gespeichert werden. Bevorzugt wird das Bild jedoch in einer in die erfindungsgemäße Vorrichtung integrierte oder mit dieser verbundenen Datenverarbeitungsvorrichtung weiterverarbeitet und der Kontaktwinkel ermittelt und ausgegeben und/oder aufgezeichnet.

Die Beleuchtungsvorrichtung erzeugt den zur Materialoberfläche möglichst parallelen Lichtstrahl, indem eine Lichtquelle diesen entweder direkt parallel zur Materialoberfläche aussendet oder indem ein entsprechender Lichtstrahl umgelenkt wird. Bevorzugt handelt es sich um weißes Licht. Es kann jedoch auch vorteilhaft sein, einfarbiges Licht zu wählen, etwa falls die Probenflüssigkeit bestimmte Wellenlängen besonders gut absorbiert oder falls die Schattenfläche geeignet ist, bestimmte Wellenlängen besonders gut zu reflektieren oder auf diese mit Fluoreszenz zu reagieren. Vorzugsweise beträgt die Strahldivergenz weniger als 15°, besonders bevorzugt weniger als 5° und ganz besonders bevorzugt weniger als 3°. Bevorzugte Ausführungsformen sehen hier eine parallel zur Materialoberfläche abstrahlende Laserdiode oder eine Leuchtdiode mit entsprechendem Linsensystem zur Strahlparallelisierung vor. Bevorzugte Ausführungsformen, die eine Umlenkung aufweisen, verfügen über eine Lichtquelle (bspw. Leuchtdiode, Halogenleuchte), deren Licht mit geeigneten Maßnahmen, wie der Anordnung von Linsen und/oder Blenden, weitgehend parallelisiert wird und anschließend in der Umlenkvorrichtung parallel zur Materialoberfläche gerichtet wird. Als Umlenkvorrichtung sind bspw. Spiegel oder Prismen geeignet. Zusätzlich können auch Maßnahmen zur Strahlformierung (Blenden, Linsen) genutzt werden. Eine weiterhin bevorzugte Ausführungsform sieht als Umlenkvorrichtung ein Bündel von Lichtleitfasern (Faserarray) vor, welches das an geeigneter Stelle in der erfindungsgemäßen Vorrichtung erzeugte Licht zum Emissionsort führt und dort parallel zur Materialoberfläche abstrahlt. Vorteilhaft kann hier der kollimierende Effekt der Lichtleitfasern zur Strahlparallelisierung genutzt werden. Weiterhin bevorzugt sind Kombinationslösungen, die bspw. die Zuführung des Lichtes mittels eines Lichtleitfaserbündels zu einem Spiegel oder einem Prisma nutzen.

Entgegen den Lösungen aus dem Stand der Technik, die vorsehen, Schattenflächen möglichst senkrecht zur Materialoberfläche anzuordnen, um eine Verzerrung des Schattenbildes zu vermeiden, ist die Schattenfläche der erfindungsgemäßen Vorrichtung in einem von 90° abweichenden Winkel zu dieser geneigt. Die Schattenfläche ist derart gegen die Materialoberfläche geneigt, dass die Fußlinie der Schattenfläche auf der Materialoberfläche senkrecht zur optischen Achse des parallelen Lichtstrahles verläuft und dem Tropfen näher ist als der Rest der Schattenfläche. Unter Fußlinie wird die Linie verstanden, an der die untere Kante der vorzugsweise rechteckigen Schattenfläche auf die Materialoberfläche trifft. Auf der Schattenfläche entsteht ein symmetrisches, in der Höhe des Tropfens verzerrtes, insbesondere ein langgezogenes Abbild des Tropfens. Dies ist vorteilhaft, da der besonders interessierende Bereich an der Kontaktstelle zwischen Materialoberfläche und Tropfen ebenfalls verzerrt und so vergrößert wird. Nicht verzerrt sind hingegen die seitlichen, senkrecht zur optischen Achse des parallelen Lichtstrahles gelegenen Abmessungen des Tropfenschattens. Aus der Abbildung des Tropfens auf der Schattenfläche und der Kenntnis des Neigungswinkels der Schattenfläche lassen sich die tatsächliche Form des Tropfens und insbesondere der Kontaktwinkel nach einfachen geometrischen Gesetzen berechnen.

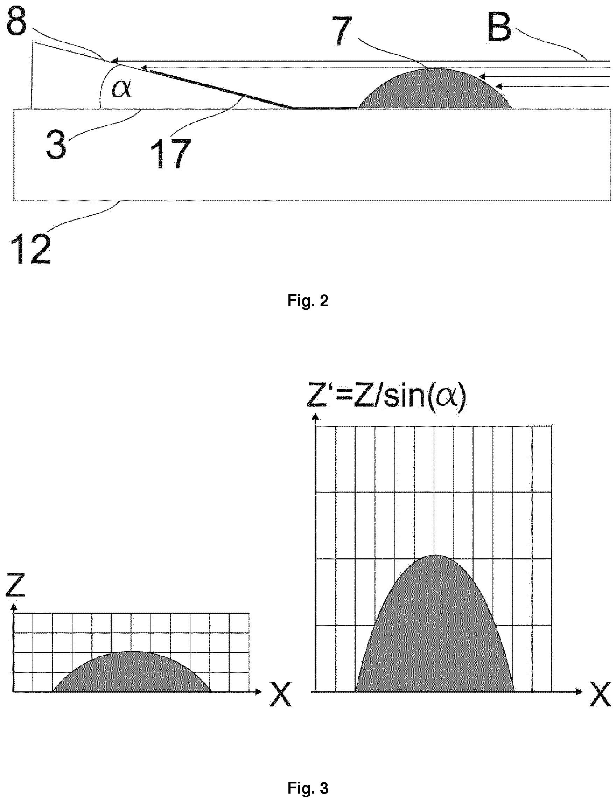

Diese Berechnungsmöglichkeiten sind in den Figuren Fig. 2 bis Fig. 4 erläutert. Die Länge des Schattens (17) ist vom Abstand des Tropfens (7) zur Schattenfläche (8) weitgehend unabhängig und hängt im Wesentlichen nur von der Höhe des Tropfens (7) und dem Neigungswinkel α der Schattenfläche (8) zur Oberfläche (3) des Probenkörpers (12) (Materialoberfläche) ab. Die Länge des Schattens Z' ist größer oder gleich der Höhe Z des Tropfens (7). Die tatsächliche Höhe jedes Punktes des Tropfenrandes (als Schnitt durch den Tropfen (7) an seiner höchsten Stelle senkrecht zur optischen Achse des parallelen Lichtstrahles) lässt sich aus der Relation:

$$Z=Z' *\sin(\alpha)$$

ermitteln, wobei Z die tatsächliche Höhe des Tropfenpunktes, Z' der Abstand des Schattenpunktes von der Fußlinie der Schattenfläche (8) und α der Neigungswinkel der Schattenfläche (8) sind.

Um eine klar erkennbare Abbildung des Tropfenschattens auf der Schattenfläche (8) zu ermöglichen, ist diese hell, bevorzugt weiß. Eine weitere bevorzugte Ausführungsform ist mit einer fluoreszierenden Beschichtung versehen, die insbesondere auf die von der Beleuchtungsvorrichtung genutzte Lichtwellenlänge bzw. -wellenlängen mit Fluoreszenz reagiert. Dies führt vorteilhaft zu einem stärkeren Kontrast zwischen dem Schattenbild des Tropfens und den beleuchteten Bereichen der Schattenfläche (8).

Die Bilderfassungsvorrichtung ist bevorzugt so vor der Schattenfläche angeordnet, dass ihre optische Achse senkrecht auf dieser steht. Vorzugsweise ist die Abweichung von dieser senkrechten Ausrichtung geringer als 30°, besonders bevorzugt geringer als 15° und ganz besonders bevorzugt kleiner als 5°. Als Bilderfassungsvorrichtung wird vorzugsweise eine Kamera bzw. eine Digitalkamera genutzt. In einer weiteren bevorzugten Ausführungsform ist anstelle einer Kamera ein Lichtleiterarray angeordnet, das das Abbild der Schattenfläche erfasst und zu einer andernorts angeordneten Kamera, einem CCD-Array oder sonstigen Bildaufnahmevorrichtung fortleitet.

Der Probenapplikator entspricht in seiner Konstruktion den aus dem Stand der Technik bekannten Lösungen. Bevorzugt weist er einen Vorratstank, eine Nadel mit Kanüle und eine Dosiereinheit auf. Zum Ablegen eines Tropfens auf der Materialoberfläche wird der Tropfenapplikator oder mindestens dessen Nadel soweit abgesenkt, dass die Nadelspitze einen geringen Abstand (ca. 0,2 bis 1 mm) zur Materialoberfläche aufweist. Die Dosiereinheit entlässt aus dem Vorratsbehälter eine definierte Flüssigkeitsmenge und führt diese der Nadel zu, die den sich an ihrem Ende ausbildenden Tropfen auf der Materialoberfläche ablegt. Die tatsächliche dosierte Flüssigkeitsmenge hängt von der Zähigkeit der Flüssigkeit, der Temperatur und der Messaufgabe ab und ist dementsprechend anzupassen. Die Steuerung der Nadelabsenkung kann manuell oder durch eine automatische Steuerung erfolgen. Die Dosierung der Flüssigkeitsmenge für die Tropfenausbildung erfolgt bevorzugt automatisch. Ganz besonders bevorzugt übernimmt eine automatische Datenverarbeitungsanlage diese Steuerung, so dass die Umgebungsparameter (Temperatur) in den Steuervorgang einbezogen werden können. In einer bevorzugten Ausführungsform weist die Dosiereinheit weitere Sensoren, insbesondere Abstandssensoren zur Bestimmung des Abstandes der Nadelspitze zur Materialoberfläche auf. Die Messwerte dieser Sensoren werden vorzugsweise in der automatischen Steuerung mit verarbeitet. Besonders bevorzugt ist diese Datenverarbeitungsanlage mit jener identisch, die auch zur Auswertung der Schattenaufnahme eingesetzt wird.

In einer bevorzugten Ausführungsform weist die erfindungsgemäße Vorrichtung mehr als einen Tropfenapplikator auf, wobei vorteilhaft jeder Tropfenapplikator eine andere Testflüssigkeit auf der Materialoberfläche applizieren kann.

In einer weiteren bevorzugten Ausführungsform wird eine Düse als Tropfenapplikator eingesetzt.

Die erfindungsgemäße Vorrichtung ist bevorzugt als manuell bewegliches Handgerät (bzw. automatisch gehandhabte Vorrichtung ähnlicher Abmessungen) ausgeführt. Die Vorrichtung vereint in einem Gehäuse vorteilhaft sowohl die Dosiereinheit als auch die Beleuchtungsvorrichtung, die Schattenfläche und die Bilderfassungsvorrichtung. In einer einfachen Ausführungsform werden die Steuer- und Messdaten drahtlos oder drahtgebunden (bspw. per Lichtleiter) zu einer oder mehreren Datenverarbeitungsvorrichtungen übertragen. Besonders bevorzugt ist die Datenverarbeitungsvorrichtung ebenfalls in der erfindungsgemäßen Vorrichtung integriert. Gewählte Steuerparameter und Messwerte werden optional an externe Datenverarbeitungs- oder Darstellungsvorrichtungen übertragen (drahtlos oder drahtgebunden). Besonders vorteilhaft ist es möglich, die Vorrichtung auf die Materialoberfläche aufzusetzen, den Tropfen zu applizieren und die Messung durchzuführen. So ist es möglich, gekrümmte Oberflächen oder Oberflächen von Teilen, die nicht in eine Laborumgebung transportiert werden können, zu vermessen. Bei gekrümmten Oberflächen ist zu beachten, dass die Krümmung nicht so stark sein darf, dass die Messverfälschung durch das Anheben oder Absenken des Tropfens im parallelen Lichtstrahl aufgrund der Krümmung zu Messfehlern außerhalb der angestrebten Toleranz führt. Der Lichtstrahl, der parallel zur Materialoberfläche verläuft und das Schattenbild des Tropfens auf der Schattenfläche projiziert, ist bei gekrümmten Flächen in dem Sinne als parallel zur Materialoberfläche anzusehen, wenn er im Auflagepunkt des Tropfens parallel zu einer Tangentialebene in diesem Auflagepunkt ist. Besonders vorteilhaft ist die Seite, mit der die Vorrichtung auf der Materialoberfläche aufgesetzt wird, definiert ausgebildet, besonders bevorzugt ist sie dazu eben und glatt oder weist zumindest wenigstens drei definierte Auflagepunkte auf. So wird nach dem Aufsetzen wiederholbar eine Oberflächenlinie definiert, die bei der Verarbeitung der Messwerte bekannt ist bzw. in der Programmierung der Datenverarbeitungsvorrichtung vorgegeben sein kann. Probleme mit der Erkennung der Materialoberfläche, wie sie aus dem Stand der Technik bekannt sind, entfallen somit.

Die Schattenfläche muss für eine möglichst genaue Messung eine definierte Fußlinie aufweisen. Sie ist daher im Bereich des Kontaktes mit der Materialoberfläche bevorzugt angeschrägt bzw. angeschliffen, so dass keine bzw. eine möglichst geringe Stufung von Materialoberfläche zu Schattenfläche entsteht. Die Schattenfläche ist vorzugsweise als wechselbares Bauelement ausgeführt, da damit zu rechnen ist, dass sie nach einer Reihe von Messungen, insbesondere im Bereich der Fußlinie, beschädigt ist. Vorzugsweise wird die Schattenfläche daher lediglich in Führungsnuten zwischen zwei Seitenflächen kraftschlüssig gehalten. Die Seitenflächen schließen ebenfalls in Höhe der Fußlinie ab, so dass die Ecken der Schattenfläche geschützt sind. In einer weiteren bevorzugten Ausführungsform ist die Schattenfläche in einem in die Vorrichtung einsetzbaren Modul enthalten. In Verbindung mit einer Verstellbarkeit des Winkels der Bildaufnahmevorrichtung über der Schattenfläche sind so unterschiedliche Neigungswinkel der Schattenfläche durch das Auswechseln der Module möglich.

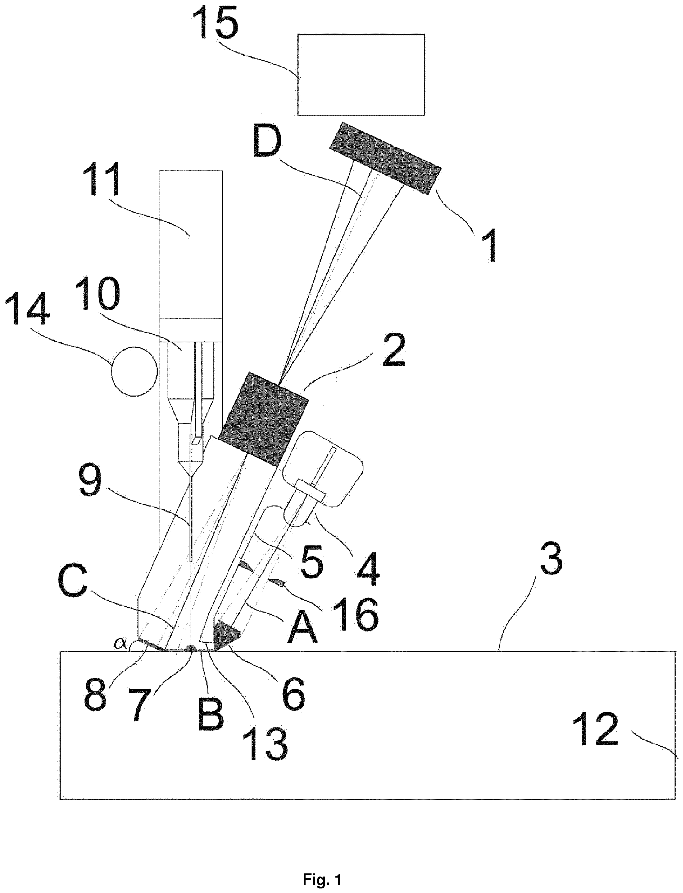

Eine besonders bevorzugte Ausführungsform des erfindungsgemäßen Kontaktwinkelmessgerätes ist in Fig. 1 schematisch dargestellt. Der Tropfen (7) wird mit einer Lichtquelle z.B. LED (4) beleuchtet. Dies erfolgt über eine optische Achse (A) in einem steilen Winkel (z.B. 70°) zur Oberfläche (3). In einer ersten Umlenkeinrichtung (6) (z.B. Prisma oder Spiegel) wird das Licht entlang der optischen Achse (B) horizontal bzw. parallel zur Oberfläche (3) umgelenkt. Der Tropfen wirft einen Schatten auf die Schattenfläche (8), welche in einer flachen Neigung (z.B. $\alpha$=25°) zur Oberfläche (3) angeordnet ist. Eine Kamera (1) nimmt durch ein Objektiv (2) (Linse) über die zur Schattenfläche (8) in steilem Winkel, vorzugsweise senkrecht angeordnete optische Achse (C-D) ein Bild des Schattenwurfes des Tropfens (7) auf der Schattenfläche (8) auf. Der direkte Lichteinfall außerhalb der optischen Achsen (A-B-C-D) von der Beleuchtung (4) wird durch eine Abtrennung (5) mit einer zur Oberfläche (3) hin offenen Schlitzblende (13) mit einer Öffnung in der Größe der Tropfendimension (z.B. Tropfenhöhe Z * Tropfenbreite X = 1.2mm * 6mm) unterbunden, so dass nur nahezu paralleles Licht auf den Tropfen geworfen wird. Der Tropfen (7) wird über eine mittels Absenkvorrichtung (14) absenkbare Dosiernadel (9) auf die Oberfläche (3) aufgebracht. Die Menge der Probenflüssigkeit zur Bildung eines einzelnen Tropfens (z.B. 1 Mikroliter) wird durch eine Dosiervorrichtung z.B. eine Pumpe (10) mit angeschlossenem Flüssigkeitstank (11) vorgegeben. Die Beleuchtung (4), die Absenkvorrichtung (14) und die Dosiervorrichtung (10) werden vorzugsweise von einem Mikroprozessor (15) gesteuert. Die Kamera (1) kann wahlweise vom Mikroprozessor oder von einem extern angeschlossenen Computer angesteuert werden. Die Bildverarbeitung und die Berechnung des Kontaktwinkels und des Volumens des Tropfens werden vom Mikroprozessor (15) oder einem angeschlossenen Computer vorgenommen. Die Anzeige der Messergebnisse erfolgt auf einem Display der Vorrichtung oder an einem angeschlossenen Computer. Für die Lichtquelle (4) wird vorzugsweise eine schmalbandige LED mit kleinem Abstrahlwinkel (z.B. 10°) mit einer Wellenlänge $\lambda$ gewählt, welche von der Probenflüssigkeit maximal absorbiert wird. Zur Parallelisierung des Lichtes im optischen Kanal (A) können eine oder mehrere Schlitzblenden (16) eingesetzt werden.

Das erfindungsgemäße Verfahren sieht folgenden Messablauf vor:

- Die Lichtquelle der Beleuchtungsvorrichtung wird eingeschaltet und die Vorrichtung auf der Materialoberfläche positioniert.
- Ein Null-Bild der Schattenfläche ohne Schatten wird aufgenommen und abgespeichert.
- Der Tropfen wird an der Dosiernadel geformt, die Dosiernadel wird bis auf einen Abstand von etwa 0.4 mm (abhängig von der Art der Probenflüssigkeit) zur Oberfläche abgesenkt, wodurch sich der Tropfen auf die Oberfläche absetzt.
- Die Dosiernadel wird zurück in die Ausgangsposition bewegt.
- Ein Bild des Schattenwurfes wird aufgenommen und mit dem Null-Bild zu einem Differenzbild (resultierendes Bild) verrechnet, wodurch Schmutz und Helligkeitsschwankungen auf der Schattenfläche selbst eliminiert werden.

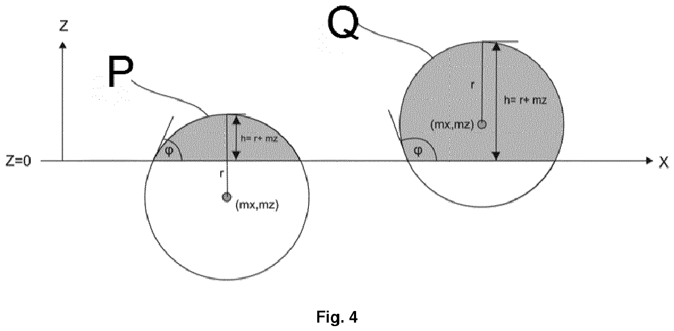

Das Verfahren zur Ermittlung der tatsächlichen Tropfenparameter aus dem Differenzbild wird wie folgt durchgeführt (siehe Fig. 4):

- Die Oberkante des Schattens des Tropfens wird im resultierenden Bild ermittelt und ergibt eine Punktfolge p(X,Z').
- Mittels Kreisausgleich kann nun der nächstgelegene Kreis K(mx,mz,r) mit (mx,mz) als Mittelpunkt und r als Radius ermittelt werden, der den minimalen quadratischen Abstand zu den Punkten P(X,Z'*sin($\alpha$)) aufweist mit $\alpha$ = Winkel der Schattenfläche (8) zur Oberfläche (3).

- Die Tropfenhöhe h ergibt sich aus h=r+mz. Bei einen Kontaktwinkel $\varphi$ < 90° ist mz negativ, da mz in diesem Fall unterhalb der Oberfläche liegt (P). Bei einem Kontaktwinkel $\varphi$ > 90° ist mz positiv, da mz in diesem Fall oberhalb der Oberfläche liegt (Q).
- Die Tropfenbreite ergibt sich als Kreissehne bei Z=0.
- Der Kontaktwinkel $\varphi$ ergibt sich aus der Steigung der Tangente an den Schnittpunkten der Kreissehne mit dem Kreis.
- Das Volumen des Tropfen ergibt sich V=h$^2$*(PI/3)*(3*r-h).

**Ausführungsbeispiel**

Das Kontaktwinkelmessgerät ist in einem Gehäuse angeordnet und weist neben der Sensorvorrichtung auch ein Display und Bedientasten auf. Auf dem Display sind die Messwerte ablesbar. Darüber hinaus sind eine Auswerte- und Speichereinheit (15) sowie eine USB-Schnittstelle zur Übertragung der gespeicherten Messwerte an einen Computer und ein Stromversorgungsanschluss vorhanden. Das Kontaktwinkelmessgerät wird direkt auf die zu untersuchende Oberfläche (3) aufgesetzt.

Mittels der Dosiervorrichtung (10) wird durch die Dosiernadel (9) (Nadelinnendurchmesser: 0,15 mm, Länge 1/2") ein Tropfen (7) mit einem Volumen von ca. 1 $\mu$l auf der Oberfläche (3) des Probenkörpers (12) abgesetzt. Der Tank (11) der Dosiervorrichtung (10) verfügt über ein Gesamtvolumen von 10 ml, von dem mittels einer miniaturisierten Piezomembranpumpe das Tropfenvolumen abgezogen wird. Die Dosiernadel (9) wird mittels eines Miniaturlinearmotors als Absenkvorrichtung (14) bewegt. Die Steuerung erfolgt ebenfalls durch die Auswerte- und Speichereinheit (15). Als Prüfflüssigkeit dient vollentsalztes Wasser (VE oder destilliertes Wasser).

Die Beleuchtung wird mittels einer LED (4) realisiert, die weißes Licht abgibt. Der Strahldurchmesser beträgt 3 mm bei einer Strahlaufweitung von 10°. Der Lichtstrahl (optische Achse A) wird von der LED in einem Winkel von 70° zur zu untersuchenden Oberfläche. Das Licht (A) wird mittels eines Prismas (6) aus transparentem Kunststoff parallel zur Oberfläche (3) umgelenkt (Strahl (B)).

Der Lichtstrahl (optische Achse B) passiert den Tropfen (7) und erreicht die Schattenfläche (8). Diese besteht aus Aluminium und ist in einem Winkel ($\alpha$) von 25° zur Materialoberfläche (3) geneigt. Die Schattenfläche (8) weist an der die Materialoberfläche (3) berührenden Kante eine Breite von 5 mm auf, bei einer Länge von 14 mm.

Auf der Oberfläche der Schattenfläche (8) wird der Schatten des Tropfens entsprechend der Neigung der Schattenfläche (8) verzerrt abgebildet.

Senkrecht zur Schattenfläche (8) und mit einem Objektivabstand von 32 mm zu dieser ist die Mehrlinsenoptik (f=16 mm) des Objektivs (2) angeordnet. Das Objektiv (2) erfasst die Abbildung auf der Schattenfläche (8) (optische Achse C). Hinter dem Objektiv (2), mit einem Abstand von ebenfalls 32 mm folgt die Kamera (1), die das vom Objektiv (2) erfasste Bild aufzeichnet (optische Achse D). Die Kamera (1) ist als CCD-Kamera ausgeführt und hat eine Auflösung von 1280x1024 Pixeln.

Von der CCD-Kamera wird das Bild als digitale Signalfolge an die Auswerteeinheit (15) übertragen und dort weiterverarbeitet, gespeichert und ggf. weiter übertragen.

Im Ergebnis der Verarbeitung wird der Kontaktwinkel entsprechend den weiter oben angeführten Berechnungsmethoden aus dem verzerrten Abbild berechnet und auf dem Display als Messwert angezeigt.

**Figuren**

**Fig. 1** zeigt den prinzipiellen Aufbau einer bevorzugten Ausführungsform des erfindungsgemäßen Kontaktwinkelmessgerätes.

**Fig. 2** zeigt schematisch die Abbildungsverhältnisse des Tropfens auf die geneigte Schattenfläche.

**Fig. 3** stellt die Abbildungsverhältnisse des Tropfenschattens bei einer vertikalen (links) und einer geneigten (rechts) Schattenfläche gegenüber.

**Fig. 4** zeigt die geometrischen Verhältnisse zur Ermittlung der Tropfenparameter für stark benetzende (links, Tropfen P) und partiell benetzende (rechts, Tropfen Q) Flüssigkeiten auf einer Oberfläche.

**Bezugszeichenliste**

1     Kamera
2     Objektiv
3     Oberfläche
4     Lichtquelle
5     Abtrennung
6     erste Umlenkeinrichtung
7     Tropfen
8     Schattenfläche
9     Dosiernadel
10    Dosiervorrichtung
11    Flüssigkeitstank
12    Probenkörper
13    Schlitzblende
14    Absenkvorrichtung
15    Mikroprozessor

16      Schlitzblende

A      optische Achse des Beleuchtungslichtstrahls von der Lichtquelle zur ersten Umlenkeinrichtung

B      optische Achse von der ersten Umlenkeinrichtung zur Schattenfläche

C      optische Achse von der Schattenfläche zum Objektiv

D      optische Achse vom Objektiv zur Kamera

P      Tropfen auf stark benetzender Oberfläche

Q      Tropfen auf partiell benetzender Oberfläche

**Patentansprüche**

1. Vorrichtung zur Messung des Kontaktwinkels eines Flüssigkeitstropfens auf einer Materialoberfläche, aufweisend eine Beleuchtungsvorrichtung, eine Bilderfassungsvorrichtung, eine Schattenfläche, mindestens eine Datenverarbeitungsvorrichtung und mindestens einen Tropfenapplikator, wobei

     a. die Beleuchtungsvorrichtung dazu eingerichtet ist, einen zu der Materialoberfläche parallelen Lichtstrahl zu erzeugen, der die Schattenfläche erreicht

     b. der Tropfenapplikator geeignet ist, einen Tropfen einer Probenflüssigkeit auf die Materialoberfläche aufzubringen und der Lichtstrahl der Beleuchtungsvorrichtung einen Schattenriss des Tropfens auf die Schattenfläche projiziert,

     c. die Bilderfassungsvorrichtung dazu eingerichtet ist, ein auf der Schattenfläche entstehendes Bild zu erfassen,

     d. die Bilderfassungsvorrichtung so vor der Schattenfläche angeordnet ist, dass ihre optische Achse weniger als 30° von der Senkrechten auf die Schattenfläche abweicht und,

     e. die Schattenfläche in einem Winkel kleiner als 90° und größer als 0,5° gegen die Materialoberfläche geneigt ist und

     f. die Datenverarbeitungsvorrichtung dazu eingerichtet ist, die die Messergebnisse der Bilderfassungsvorrichtung auszuwerten und aus der Abbildung des Tropfens auf der Schattenfläche und der Kenntnis des Neigungswinkels der Schattenfläche den Kontaktwinkel zu errechnen.

2. Vorrichtung nach Anspruch 1, **dadurch gekennzeichnet, dass** die Beleuchtungsvorrichtung den parallelen Lichtstrahl ohne Umlenkungen erzeugt.

3. Vorrichtung nach Anspruch 1, **dadurch gekennzeichnet, dass** die Beleuchtungsvorrichtung den parallelen Lichtstrahl erzeugt, indem der Lichtstrahl einer Lichtquelle formiert und mit einem Spiegel oder Prisma umgelenkt wird.

4. Vorrichtung nach Anspruch 1, **dadurch gekennzeichnet, dass** das Licht einer Lichtquelle an einem Ende eines Lichtleitfaserbündels eingespeist wird und das andere Ende des Lichtleitfaserbündels so ausgerichtet wird, dass das austretende Licht den parallelen Lichtstrahl erzeugt.

5. Vorrichtung nach einem der vorhergehenden Ansprüche, **dadurch gekennzeichnet, dass** die Schattenfläche eine helle, vorzugsweise weiße Oberflächenbeschichtung aufweist.

6. Vorrichtung nach einem der Ansprüche 1 bis 4, **dadurch gekennzeichnet, dass** die Schattenfläche eine Oberflächenbeschichtung aufweist, die auf das von der Beleuchtungsvorrichtung ausgesandte Licht mit Fluoreszenz regiert.

7. Vorrichtung nach einem der vorhergehenden Ansprüche, **dadurch gekennzeichnet, dass** die Bilderfassungsvorrichtung so vor der Schattenfläche angeordnet ist, dass ihre optische Achse auf einer Senkrechten auf die Schattenfläche liegt.

8. Vorrichtung nach einem der vorhergehenden Ansprüche, **dadurch gekennzeichnet, dass** die Schattenfläche an ihrer Fußlinie derart angeschrägt ist, dass sie keine Übergangsstufe von der Materialoberfläche zur Schattenfläche ausbildet.

9. Vorrichtung nach einem der vorhergehenden Ansprüche, **dadurch gekennzeichnet, dass** die mindestens eine Datenverarbeitungsvorrichtung weiterhin dazu eingerichtet ist, den Tropfenapplikator, die Beleuchtungsvorrichtung und die Bilderfassungsvorrichtung zu steuern.

10. Verfahren zur Bestimmung des Kontaktwinkels eines Flüssigkeitstropfens auf einer Materialoberfläche, aufweisend die folgenden Schritte:

     a. Positionieren der Vorrichtung zur Messung des Kontaktwinkels auf der Materialoberfläche und Einschalten der Lichtquelle der Beleuchtungsvorrichtung wobei die Vorrichtung auf der Materialoberfläche derart positioniert ist, dass die Beleuchtungsvorrichtung einen zu der Materialoberfläche parallelen Lichtstrahl erzeugt,

     b. Aufnehmen und Abspeichern eines Null-Bildes der beleuchteten, in einem Winkel kleiner als 90° und größer als 0,5° gegen die Materialoberfläche geneigten Schattenfläche ohne einen Tropfenschatten,

     c. Ausformen des Tropfens an der Dosiernadel, Absenken der Dosiernadel bis nahe zur Materialoberfläche und Absetzen des Tropfens auf der Materialoberfläche,

d. Zurückbewegen der Dosiernadel in die Ausgangsposition,

e. Aufnehmen eines Bild des Schattenwurfes des Tropfens auf der Schattenfläche mittels der Bilderfassungsvorrichtung, wobei die Bilderfassungsvorrichtung so vor der Schattenfläche angeordnet ist, dass ihre optische Achse weniger als 30° von der Senkrechten auf die Schattenfläche abweicht,

f. Verrechnung des Bildes des Schattenwurfes des Tropfens auf der Schattenfläche mit dem Null-Bild zu einem Differenzbild,

g. Ermittlung der Tropfenabmessungen einschließlich des Kontaktwinkels aus der Kenntnis der Neigung der Schattenfläche und den Abmessungen des Tropfenschattens im Differenzbild.

11. Verfahren nach Anspruch 10, **dadurch gekennzeichnet, dass** die Formung des Tropfens an der Dosiernadel und die Absenkung der Dosiernadel oder des gesamten Tropfenapplikators durch die Datenverarbeitungsvorrichtung gesteuert werden.

**Claims**

1. Device for measuring the contact angle of a liquid drop on a material surface, having a lighting device, an image recording device, a shadow surface, at least one data-processing device and at least one drop dispenser, wherein

    a. the lighting device is designed to generate a light beam parallel to the material surface that reaches the shadow surface,

    b. the drop dispenser is suitable for applying a drop of sample liquid to the material surface, and the light beam of the lighting device projects a silhouette of the drop onto the shadow surface,

    c. the image recording device is designed to record an image arising on the shadow surface,

    d. the image recording device is arranged in front of the shadow surface in such a way that its optical axis deviates less than 30° from a perpendicular position visa-vis the shadow surface,

    e. the shadow surface is tilted at an angle less than 90° and greater than 0.5° visa-vis the material surface, and

    f. the data-processing device is designed to evaluate the measurement results of the image recording device and to calculate the contact angle from the image of the drop on the shadow surface and the knowledge of the angle of tilt of the shadow surface.

2. Device according to claim 1, **characterized in that** the lighting device generates the parallel light beam without redirection.

3. Device according to claim 1, **characterized in that** the lighting device generates the parallel light beam by forming the light beam of a light source and redirecting it with a mirror or prism.

4. Device according to claim 1, **characterized in that** the light of a light source is fed into one end of a bundle of optical fibers and the other end of the bundle of optical fibers is aligned in such a way that the emitted light generates the parallel light beam.

5. Device according to one of the previous claims, **characterized in that** the shadow surface has a bright, preferably white, surface coating.

6. Device according to one of the claims 1 to 4, **characterized in that** the shadow surface has a surface coating that reacts with fluorescence with the light that is emitted from the lighting device.

7. Device according to one of the previous claims, **characterized in that** the image recording device is arranged in front of the shadow surface in such a way that the optical axis is on a perpendicular line to the shadow surface.

8. Device according to one of the previous claims, **characterized in that** the shadow surface is beveled at its base line to the effect that it does not form a transition step from the material surface to the shadow surface.

9. Device according to one of the previous claims, **characterized in that** the at least one data-processing device is also designed to control the drop dispenser, the lighting device and the image recording device.

10. Method for determining the contact angle of a liquid drop on a material surface, comprising the following steps:

    a. positioning the device for measuring the contact angle on the material surface and switching on the light source of the lighting device, wherein the device is positioned on the material surface in such a way that the lighting device generates a light beam parallel to the material surface,

    b. recording and saving a null image of the illuminated shadow surface without a drop shadow that is tilted at an angle less than 90° and greater than 0.5° vis-a-vis the material surface,

    c. forming the drop on the tip of the proportioning needle, lowering the proportioning needle to the proximity of the material surface and putting down the drop on the material surface,

d. moving the proportioning needle back to the starting position,

e. recording an image of the shadow of the drop on the shadow surface via the image recording device, wherein the image recording device is arranged in front of the shadow surface in such a way that its optical axis deviates less than 30° from the perpendicular line onto the shadow surface,

f. offsetting the image of the shadow of the drop with the null image to form a differential image,

g. determining the drop dimensions including the contact angle from the knowledge of the tilt of the shadow surface and the dimensions of the drop shadow in the differential image.

11. Method according to claim 10, **characterized in that** the formation of the drop on the proportioning needle and the lowering of the proportioning needle or of the entire drop dispenser are controlled by the data-processing device.

## Revendications

1. Dispositif de mesure de l'angle de contact d'une goutte de liquide sur une surface de matériau, présentant un dispositif d'éclairage, un dispositif de capture d'image, une zone d'ombre, au moins un dispositif de traitement des données et au moins un applicateur de gouttes, dans lequel

   a. le dispositif d'éclairage est agencé afin de générer un rayon lumineux parallèle à la surface de matériau, qui atteint la zone d'ombre

   b. l'applicateur de gouttes est approprié pour appliquer une goutte d'un liquide d'échantillon sur la surface de matériau et le rayon lumineux du dispositif d'éclairage projette une silhouette de la goutte sur la zone d'ombre,

   c. le dispositif de capture d'image est conçu de manière à capturer une image apparaissant sur la zone d'ombre,

   d. le dispositif de capture d'image est disposé avant la zone d'ombre de telle sorte que son axe optique dévie de moins de 30° de la verticale sur la zone d'ombre et,

   e. la zone d'ombre est inclinée à un angle inférieur à 90° et supérieur à 0,5° vers la surface de matériau et

   f. le dispositif de traitement de données est conçu de manière à évaluer les résultats de mesure du dispositif de capture d'image et, à partir de l'image de la goutte sur la zone d'ombre et de de l'angle d'inclinaison connu de la zone d'ombre, à calculer l'angle de contact.

2. Dispositif selon la revendication 1, **caractérisé en ce que** le dispositif d'éclairage génère le rayon lumineux parallèle sans déviation.

3. Dispositif selon la revendication 1, **caractérisé en ce que** le dispositif d'éclairage génère le rayon lumineux parallèle, le rayon lumineux formant une source de lumière et étant dévié avec un miroir ou un prisme.

4. Dispositif selon la revendication 1, **caractérisé en ce que** la lumière d'une source de lumière est injectée à une extrémité d'un faisceau de fibres optiques et l'autre extrémité du faisceau de fibres optiques est conçue de manière à ce que la lumière sortante génère le rayon lumineux parallèle.

5. Dispositif selon l'une des revendications précédentes, **caractérisé en ce que** la zone d'ombre présente un revêtement de surface clair, de préférence blanc.

6. Dispositif selon l'une des revendications 1 à 4, **caractérisé en ce que** la zone d'ombre présente un revêtement de surface réagissant par fluorescence à la lumière émise par le dispositif d'éclairage.

7. Dispositif selon l'une des revendications précédentes, **caractérisé en ce que** le dispositif de capture d'image est disposé avant la zone d'ombre de telle sorte que son axe optique se trouve sur une verticale sur la zone d'ombre.

8. Dispositif selon l'une des revendications précédentes, **caractérisé en ce que** la zone d'ombre est biseautée au niveau de sa ligne de pied de telle sorte qu'elle ne forme pas de niveau de transition entre la surface de matériau et la zone d'ombre.

9. Dispositif selon l'une des revendications précédentes, **caractérisé en ce que** l'au moins un dispositif de traitement de données est en outre conçu de manière à commander l'applicateur de gouttes, le dispositif d'éclairage et le dispositif de capture d'images.

10. Procédé de détermination de l'angle de contact d'une goutte de liquide sur une surface de matériau, consistant en les étapes suivantes :

    a. positionner le dispositif de mesure de l'angle de contact sur la surface de matériau et activer de la source de lumière du dispositif d'éclairage, le dispositif étant positionné de telle sorte sur la surface de matériau que le dispositif d'éclairage génère un rayon lumineux parallèle à la surface de matériau,

    b. enregistrer et sauvegarder une image zéro de la zone d'ombre éclairée, inclinée à un angle inférieur à 90° et supérieur à 0,5° vers la surface de matériau sans une ombre de goutte,

c. former la goutte au niveau de la seringue de dosage, abaisser la seringue de dosage à proximité de la surface de matériau et déposer la goutte sur la surface de matériau,

d. faire revenir la seringue de dosage à la position de départ,

e. enregistrer une image de la projection d'ombre de la goutte sur la zone d'ombre au moyen du dispositif de capture d'image, le dispositif de capture d'image étant disposé devant la zone d'ombre de telle sorte que son axe optique dévie de moins de 30° de la verticale sur la zone d'ombre,

f. calculer l'image de la projection d'ombre de la goutte sur la zone d'ombre avec l'image zéro par rapport à une image différentielle,

g. évaluer les dimensions de la goutte y compris l'angle de contact à partir d'inclinaison connu de la zone d'ombre et les dimensions de l'ombre de la goutte dans l'image différentielle.

**11.** Procédé selon la revendication 10, **caractérisé en ce que** la formation de la goutte au niveau de la seringue de dosage et l'abaissement de la seringue de dosage ou de l'applicateur de goutte intégral sont commandées par le dispositif de traitement des données.

**Fig. 1**

Fig. 2

$$Z'=Z/\sin(\alpha)$$

Fig. 3

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1729109 A1
- US 5268733 A
- DE 19754765 C1